# FASCICULE DE BREVET EUROPEEN

(11) **EP 1 336 519 B1**
(45) Date de publication et mention de la délivrance du brevet: **12.09.2007**
(21) Numéro de dépôt: 02364033.7
(22) Date de dépôt: 05.07.2002
(51) Int. Cl.: B60J 1/20

(54) **Store pour véhicule autombile, à barre de tirage comprenant une coque mobile**
Fensterrolle für Kraftfahrzeug mit Zugstange mit mobiler Abdeckung
Roller blind for motor vehicle with pull bar comprising a mobile cover

(30) Priorité: 05.07.2001 FR 0109116
(43) Date de publication de la demande: 20.08.2003
(73) Titulaire: WAGON SAS, 79300 Bressuire (FR)
(72) Inventeur: Moreau, Stéphane, F-37500 CRAVANT-LES-COTEAUX (FR)
(74) Mandataire: Bioret, Ludovic

(56) Documents cités:
- EP-A- 1 099 579
- EP-A- 1 157 870
- DE-A- 19 835 257

## Description

Le domaine de l'invention est celui des stores, notamment pour véhicule automobile (tel que les voitures, les véhicules utilitaires, les camions, les autobus, etc.). Plus précisément, l'invention concerne les stores munis d'une barre de tirage venant recouvrir, lorsque le store est replié, une fente ménagée dans le support du store (par exemple une plage arrière ou une garniture de portière), et dans laquelle peut circuler la toile du store.

Bien que l'invention puisse être adaptée à d'autres types de stores, on se réfère par la suite aux stores enrouleurs, qui sont les stores que l'on rencontre le plus couramment. Il est aisé de généraliser l'invention à d'autres types, tels que par exemple un store mettant en oeuvre un pliage en accordéon.

Classiquement, un store à un enrouleur présente une toile, ou rideau, formant écran, en position déployée, devant une baie vitrée. La toile est donc susceptible d'être déroulée ou enroulée au travers d'une fente ménagée dans l'habillage intérieur ou la tablette arrière d'un véhicule.

Une des extrémités de la toile est montée sur un rouleau, ou tube enrouleur, mobile en rotation. L'autre extrémité de la toile est munie d'une barre de tirage.

En position reployée, la toile est essentiellement enroulée autour du tube d'enroulement, et la barre de tirage vient, par exemple, en appui sur l'habillage intérieur ou sur la tablette arrière du véhicule, de façon à recouvrir la fente. Il est en effet souhaitable, tant pour des raisons esthétiques que pour des raisons de sécurité, de confort et d'ergonomie que cette fente soit obturée, afin d'empêcher le passage de la poussière ou des petits objets, qui pourraient générer du bruit et provoquer un blocage ou une détérioration du store.

Il est donc connu de configurer les barres de tirage de façon qu'elles viennent recouvrir la fente. Dans certains cas cependant, la fente doit présenter une largeur importante. Cela est notamment le cas lorsque le store est motorisé, et que ses moyens d'actionnement circulent dans la fente.

Il peut par exemple s'agir de biellettes mobiles entre une position où elles sont sensiblement parallèles au tube enrouleur et une position où elles sont sensiblement perpendiculaires au tube enrouleur. Les biellettes peuvent être remplacées par de moyens assurant la même fonction (croisillons, compas, pistons,...). Des moyens de rappel agissent sur le tube d'enroulement, de façon que le réenroulement de la toile se fasse dans de bonnes conditions.

Un store selon le préambule de la revendication 1 est connu de DE 19835257 A.

Dans ce cas, la barre de tirage doit présenter une grande largeur, qui peut s'avérer inadéquate lors du déploiement ou du repliement de la toile. Elle risque, en effet, de venir en contact avec la vitre, ou avec un élément de la structure du véhicule.

Ce problème est encore plus crucial lorsque la barre de tirage est équipée de roulettes, ou des moyens similaires tels que des patins, prévus pour venir prendre appui sur une vitre, de façon à faciliter le guidage de la toile. En effet, la grande largeur de la barre de tirage peut empêcher le contact des roulettes avec la vitre, à moins de prévoir des moyens spécifiques. Pourtant, la présence des roulettes impose une grande largeur de la fente, au moins au niveau de leur passage.

L'invention a notamment pour objectif de pallier ces inconvénients de l'art antérieur.

Plus précisément, un objectif de l'invention est de fournir un store, notamment pour véhicule automobile, permettant la mise en oeuvre d'une barre de tirage venant recouvrir la fente de passage de la toile, sans qu'elle perturbe le déploiement ou repliement de la toile d'occultation.

Notamment, un objectif de l'invention est de fournir un tel store, permettant la mise en oeuvre de roulettes ou de patins, pour le guidage de la barre de tirage le long d'une vitre arrière par exemple.

Un autre objectif de l'invention est de fournir un tel store, qui soit simple et peu coûteux à réaliser, et aisé à mettre en oeuvre.

L'invention a également pour objectif de fournir un tel store, qui présente de bonnes qualités, en termes d'esthétique, d'ergonomie, de confort et/ou de sécurité.

Ces objectifs ainsi que d'autres qui apparaîtront par la suite, sont atteints à l'aide d'un store, notamment pour véhicule automobile, comprenant une toile d'occultation mobile entre une position déployée et une position repliée, sous l'action d'une barre de tirage montée à une extrémité de ladite toile d'occultation. Selon l'invention, ladite barre de tirage comprend une base, solidarisée à ladite toile d'occultation, et une coque montée articulée sur ladite base, de façon à :
- recouvrir une fente, dans laquelle peut circuler ladite toile, lorsque le store est en position repliée ;
- prendre une position de dégagement dans les autres situations.

En d'autres termes, la barre de tirage comprend, selon l'invention, deux parties mobiles l'une par rapport à l'autre. La coque peut recouvrir une fente, même de grande largeur, sans perturber le déploiement de la toile. En effet, elle prend une seconde position, de dégagement, dès que la toile n'est plus repliée.

Selon un mode de réalisation préférentiel de l'invention, ladite coque est montée basculante sur deux premiers axes réalisés sur ladite base.

Il s'agit d'un mode de mise en oeuvre de l'invention simple et efficace.

De façon avantageuse, ladite barre de tirage porte au moins un élément de guidage et/ou de maintien prévu pour venir en appui contre une vitre et/ou un élément de structure du véhicule, lors du déploiement et/ou du repliement de ladite toile d'occultation.

Il peut notamment s'agir de roulettes ou de patins. En particulier, le store de l'invention peut comprendre deux roulettes montées chacune sur un second axe fixe réalisé sur ladite base.

Dans ce cas, préférentiellement, lesdits premiers et seconds axes sont les mêmes. Cela permet notamment de simplifier la réalisation du store.

De façon préférentielle, ladite fente est conçue pour laisser le passage du ou desdits éléments de guidage et/ou de maintien. Dans ce cas, ladite coque est avantageusement conçue pour recouvrir intégralement ladite fente.

Préférentiellement, ladite position de dégagement est définie telle que ladite coque n'entre en contact avec aucune vitre ni aucun élément de structure du véhicule.

Selon un mode de réalisation avantageux, ladite coque est conçue de façon à venir dans ladite position de dégagement sous l'effet de son poids.

Selon une autre approche avantageuse, pouvant bien sûr être mise en oeuvre en combinaison avec la précédente, le store comprend des moyens de rappel, tendant à ramener ladite coque dans ladite position de dégagement.

Dans ce cas, lesdits moyens de rappel peuvent notamment comprendre au moins un ressort d'assistance, logé dans ladite base.

La technique de l'invention peut s'appliquer à différents types de stores connus en eux-mêmes, et en particulier aux stores à enrouleur, dont ladite toile d'occultation est montée sur un tube enrouleur.

Par ailleurs, le déploiement et/ou le repliement de ladite toile d'occultation est avantageusement motorisé. Des stores manuels peuvent également être envisagés.

D'autres caractéristiques et avantages de l'invention apparaîtront plus clairement à la lecture de la description suivante d'un mode de réalisation préférentiel de l'invention, donné à titre de simple exemple illustratif et non limitatif et des dessins annexés parmi lesquels :
- la figure 1 est une vue d'ensemble d'un store selon l'invention, en position déployée, équipant une tablette arrière d'un véhicule ;
- les figures 2A et 2B illustrent, vu de côté, la barre de tirage selon l'invention, respectivement :

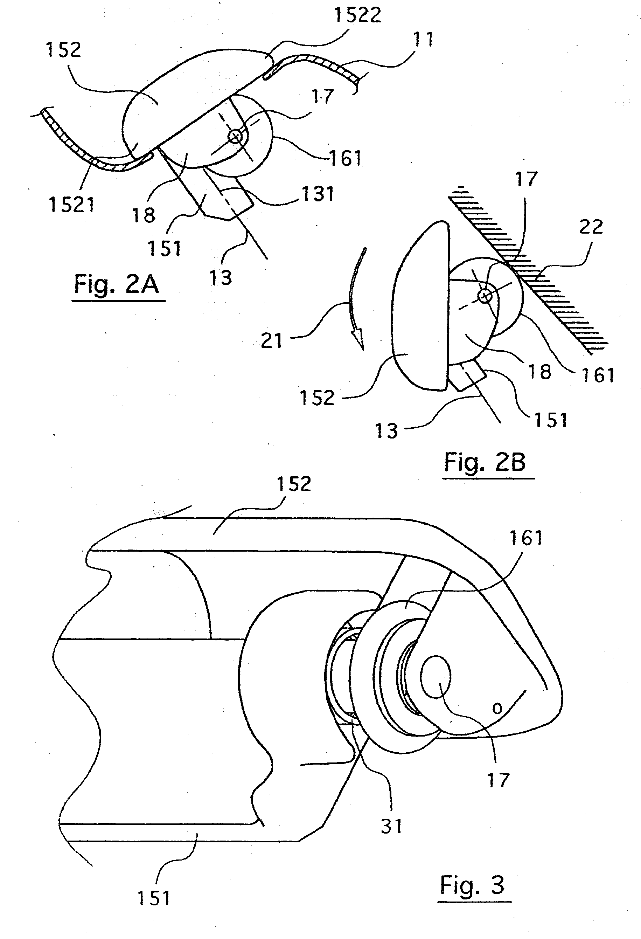

   - figure 2A : lorsque le store est replié ;
   - figure 2B : lorsque le store est déployé.

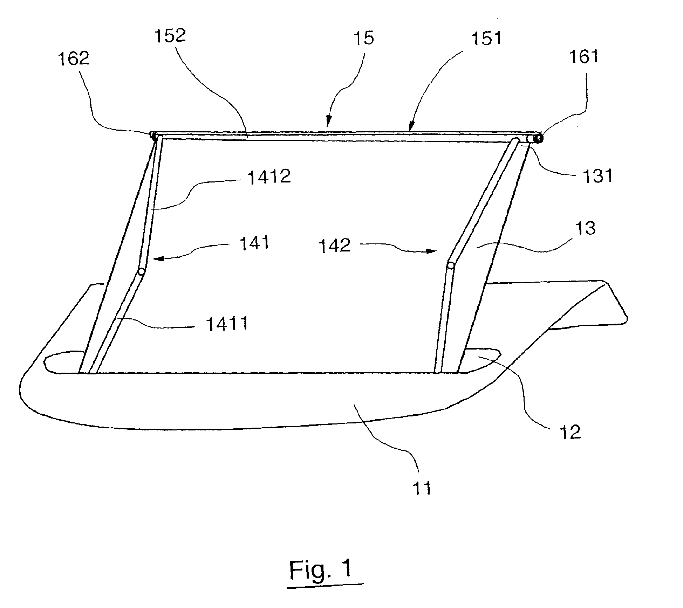

- La figure 3 présente, en perspective, une portion de la barre de tirage du store de la figure 1, selon un mode particulier de réalisation.

La figure 1 présente donc une vue d'ensemble d'un exemple de store selon l'invention. Ce store, motorisé, est destiné à occulter une vitre arrière (non représentée) d'un véhicule automobile. La même technique peut bien sûr être adaptée à d'autres ouvertures que la vitre arrière, et à d'autres types de véhicule.

Le store est monté sous une tablette 11, formant plage arrière, par exemple dans un boîtier fixé sous la tablette, ou dans un logement prévu à cet effet dans la tablette 11.

Une fente 12 est ménagée dans la tablette 11, afin de permettre le passage de la toile 13, ainsi que des moyens d'actionnement, formés ici de deux biellettes de guidage et/ou de maintien 141 et 142. Ces biellettes sont ici constituées de deux branches 1411 et 1412 formant compas. Bien entendu, d'autres types de moyens d'actionnement peuvent être utilisés, tels que des leviers, des pistons, des croisillons,...

Ces moyens d'actionnement sont conçus pour circuler dans la fente 11, de façon à être intégralement dissimulés lorsque le store est replié.

Le déroulement et/ou l'enroulement de la toile 13 sont préférentiellement assurés par une motorisation électrique, non représentée.

L'extrémité libre 131 de la toile 13 est équipée d'une barre de tirage 15, à laquelle sont solidarisées les extrémités des biellettes 141 et 142. Cette barre de tirage 15 est équipée de deux roulettes 161 et 162 prévues pour rouler le long de la vitre lors du déploiement et du reploiement, afin de faciliter le guidage, la mise en place et le maintien du store en position déployée notamment.

Les roulettes 161 et 162 peuvent être remplacées par des patins, ou par des moyens similaires.

La fente 11 est conçue de façon à permettre le passage de ces roulettes 161 et 162.

Ainsi, en position repliée, la barre de tirage 15 vient recouvrir la fente 11, de façon à empêcher le passage de la poussière et de petits objets, et à conférer un aspect esthétique et ergonomique à la tablette 11.

Selon l'invention, la barre de tirage 15 comprend d'une part, une base 151, solidarisée à la toile 13 et aux biellettes 141 et 142, et portant les roulettes 161 et 162, et d'autre part une coque 152, montée basculante par rapport à la base 151. Ce mécanisme est décrit maintenant plus en détail, à l'aide des figures 2A et 2B, et de la figure 3.

Sur la figure 2A, on a représenté la barre de tirage 15, vue de côté, lorsque le store est en position repliée. La tablette 11 présente, sur l'exemple illustré, un creux 111 dans lequel est ménagée la fente 12. La coque 152 vient en contact avec les bords de la fente 12, de façon à obturer intégralement celle-ci. Elle est plaquée contre cette tablette 11, sous l'action de la force de rappel appliquée, via la toile 13, par un ressort de rappel agissant sur le tube à enrouleur (non représenté) et/ou par une motorisation agissant sur le tube enrouleur.

La base 151 de la barre de tirage 15 est solidarisée à l'extrémité libre 131 de la toile 13. Elle porte également les roulettes 161 et 162, montées chacune sur un axe 17 solidaire de la base.

La coque 152 est également montée sur ces axes 17, à l'aide de chapes 18, de façon à pouvoir basculer (flèche 21, en figure 2 B).

Ainsi, dès que la coque 152 n'est plus en contact avec la tablette 11 (figure 2A), elle bascule pour prendre la position de dégagement de la figure 2B. La roulette 161 peut ainsi venir sans problème en contact avec la lunette arrière 22. La coque 152 n'entre en contact avec aucun élément, et conserve en outre, vue de l'intérieur du véhicule, sa fonction d'enjoliveur, dissimulant le reste de la barre de tirage et les roulettes.

La coque 152 bascule jusqu'à venir en contact avec la base 151, ou avec une butée prévue à cet effet. Elle est avantageusement lestée ou conçue de façon qu'elle bascule automatiquement, sous l'effet de son poids, dans la position de la figure 2B.

Lors du repliement, la partie inférieure 1521 de la coque 152 vient tout d'abord en contact avec la tablette 11. Sous l'effet de la force de rappel appliquée à la toile, la coque 152 bascule, jusqu'à ce que la partie supérieure 1522 vienne à son tour en contact avec la tablette.

La figure 3 illustre, en perspective, une portion de la barre de tirage selon l'invention. La base 151 présente un logement 153 depuis lequel s étend l'axe 17 sur lequel est montée la roulette 161 ainsi que la coque 152, de façon que cette dernière puisse basculer par rapport à la base 151.

Dans ce mode de réalisation, on a prévu un ressort d'assistance 31, dont l'un des brins est fixé à la coque 152 pour le forcer à prendre sa position de dégagement (figure 2B), à la place ou en complément de l'effet du poids.

## Revendications

1. Store, notamment pour véhicule automobile, comprenant une toile d'occultation (13) mobile entre une position déployée et une position repliée, sous l'action d'une barre de tirage (15) montée à une extrémité de ladite toile d'occultation, **caractérisé en ce que** ladite barre de tirage comprend une base (151), solidarisée à ladite toile d'occultation, et une coque (152) montée articulée sur ladite base, de façon à :
- recouvrir une fente (12), dans laquelle peut circuler ladite toile, lorsque le store est en position repliée ;
- prendre une position de dégagement dans les autres situations.

2. Store selon la revendication 1, **caractérisée en ce que** ladite coque est montée basculante sur deux premiers axes (17) réalisés sur ladite base.

3. Store selon l'une quelconque des revendications 1 et 2, **caractérisé en ce que** ladite barre de tirage porte au moins un élément de guidage et/ou de maintien (161) prévu pour venir en appui contre une vitre et/ou un élément de structure du véhicule, lors du déploiement et/ou du repliement de ladite toile d'occultation.

4. Store selon la revendication 3, **caractérisé en ce qu**'il comprend deux roulettes (161) montées chacune sur un second axe (17) fixe réalisé sur ladite base.

5. Store selon les revendications 2 et 4, **caractérisé en ce que** lesdits premiers et seconds axes sont les mêmes.

6. Store selon l'une quelconque des revendications 3 à 5, **caractérisé en ce que** ladite fente (12) est conçue pour laisser le passage du ou desdits éléments de guidage et/ou de maintien.

7. Store selon la revendication 6, **caractérisé en ce que** ladite coque est conçue pour recouvrir intégralement ladite fente.

8. Store selon l'une quelconque des revendications 1 à 7, **caractérisé en ce que** ladite position de dégagement est telle que ladite coque n'entre en contact avec aucune vitre ni aucun élément de structure du véhicule.

9. Store selon l'une quelconque des revendications 1 à 8, **caractérisée en ce que** ladite coque est conçue de façon à venir dans ladite position de dégagement sous l'effet de son poids.

10. Store selon l'une quelconque des revendications 1 à 9, **caractérisée en ce qu**'il comprend des moyens de rappel (31), tendant à ramener ladite coque dans ladite position de dégagement.

11. Store selon la revendication 10, **caractérisée en ce que** lesdits moyens de rappel comprennent au moins un ressort d'assistance, logé dans ladite base.

12. Store selon l'une quelconque des revendications 1 à 11, **caractérisé en ce que** ladite toile d'occultation est montée sur un tube enrouleur.

13. Store selon l'une quelconque des revendications 1 à 12, **caractérisé en ce que** le déploiement et/ou le repliement de ladite toile d'occultation est motorisé.

## Claims

1. A blind, in particular for a motor vehicle, comprising a shading fabric (13) movable between an opened-out position and a rolled-up position through the action of a draw bar (15) mounted at one end of said shading fabric, **characterised in that** said draw bar comprises a base (151), firmly connected to said shading fabric, and a shell (152) mounted in articulated manner on said base, so as to:
- cover a slot (12), through which said fabric may move, when the blind is in the rolled-up position;
- assume a release position in other situations.

2. A blind according to claim 1, **characterised in that** said shell is mounted so as to swing on two first spindles (17) provided on said base.

3. A blind according to either one of claims 1 and 2, **characterised in that** said draw bar bears at least one guiding and/or holding element (161) provided so as to rest against a window pane and/or a structural element of the vehicle when said shading fabric is being opened out and/or rolled up.

4. A blind according to claim 3, **characterised in that** it comprises two rollers (161) each mounted on a second fixed spindle (17) provided on said base.

5. A blind according to claims 2 and 4, **characterised in that** said first and second spindles are the same.

6. A blind according to any one of claims 3 to 5, **characterised in that** said slot (12) is designed to allow said guiding and/or holding element(s) to pass through it.

7. A blind according to claim 6, **characterised in that** said shell is designed to cover fully said slot.

8. A blind according to any one of claims 1 to 7, **characterised in that** said release position is such that said shell does not come into contact with any window pane nor with any structural element of the vehicle.

9. A blind according to any one of claims 1 to 8, **characterised in that** said shell is designed so as to move into said release position under the influence of its own weight.

10. A blind according to any one of claims 1 to 9, **characterised in that** it comprises return means (31) which tend to bring said shell back into said release position.

11. A blind according to claim 10, **characterised in that** said return means comprise at least one assisting spring, accommodated in said base.

12. A blind according to any one of claims 1 to 11, **characterised in that** said shading fabric is mounted on a winding tube.

13. A blind according to any one of claims 1 to 12, **characterised in that** opening out and/or rolling up of said shading fabric is motorised.

## Patentansprüche

1. Rollo, insbesondere für ein Kraftfahrzeug, mit einer zur Verdeckung Stoffbahn (13), die unter der Wirkung einer an einem Ende dieser Stoffbahn montierten Zugstange (15) zwischen einer ausgezogenen und einer aufgerollten Position bewegt werden kann,
**dadurch gekennzeichnet, dass** diese Zugstange einen Unterteil (151) umfasst, der mit der Stoffbahn verbunden ist, sowie eine Ummantelung (152), die an diesem Unterteil angelenkt ist, so dass:
- ein Schlitz (12), in dem die Stoffbahn läuft, abgedeckt wird, wenn das Rollo eingerollt ist ;
- diese Ummantelung unter den anderen Bedingungen den Schlitz freigibt.

2. Fensterrollo nach Anspruch 1,
**dadurch gekennzeichnet, dass** die Ummantelung schwenkbar auf zwei ersten Wellen (17) an diesem Unterteil montiert ist.

3. Fensterrollo nach einem der Ansprüche 1 und 2,
**dadurch gekennzeichnet, dass** die Zugstange mindestens ein Führungs- und/oder Halteelement (161) trägt, das beim Ausziehen bzw. Einrollen der Stoffbahn an einer Scheibe und/oder einem Aufbauelement des Fahrzeugs anliegt.

4. Fensterrollo nach Anspruch 3,
**dadurch gekennzeichnet, dass** es zwei Rollen (161) umfasst, die jeweils auf einer zweiten festen Welle (17) montiert sind, die am genannten Unterteil ausgeführt ist.

5. Fensterrollo nach den Ansprüchen 2 und 4,
**dadurch gekennzeichnet, dass** die ersten und zweiten Wellen identisch sind.

6. Fensterrollo nach einem der Ansprüche 3 bis 5,
**dadurch gekennzeichnet, dass** der genannte Schlitz (12) so konzipiert ist, dass das Führungs- bzw. Halteelement bzw. die Führungs- bzw. Halteelemente durch ihn hindurch laufen können.

7. Fensterrollo nach Anspruch 6,
**dadurch gekennzeichnet, dass** die Ummantelung so konzipiert ist, dass sie den Schlitz komplett abdeckt.

8. Fensterrollo nach einem der Ansprüche 1 bis 7,
**dadurch gekennzeichnet, dass** die Abdeckung in der Position, die den Schlitz freigibt, mit keiner Scheibe und mit keinem anderen Aufbauelement des Fahrzeugs in Berührung kommt.

9. Fensterrollo nach einem der Ansprüche 1 bis 8,
**dadurch gekennzeichnet, dass** die Ummantelung so konzipiert ist, dass sie aufgrund ihres Eigengewichts in die genannte Position, in der der Schlitz freigegeben ist, kippt.

10. Fensterrollo nach einem der Ansprüche 1 bis 9,
**dadurch gekennzeichnet, dass** es Rückholmittel (31) umfasst, die diese Ummantelung in die Position, in der der Schlitz freigegeben ist, zurückbringen.

11. Fensterrollo nach Anspruch 10,
**dadurch gekennzeichnet, dass** diese Rückholmittel mindestens eine Feder umfassen, die im Unterteil sitzt.

12. Fensterrollo nach einem der Ansprüche 1 bis 11,
**dadurch gekennzeichnet, dass** die Stoffbahn auf ein Aufwickelrohr montiert ist.

13. Fensterrollo nach einem der Ansprüche 1 bis 12,
**dadurch gekennzeichnet, dass** das Ausziehen und/oder Einrollen der Stoffbahn motorisiert ist.
